# FASCICULE DE BREVET EUROPEEN

(11) **EP 3 736 156 B1**
(45) Date de publication et mention de la délivrance du brevet: **09.02.2022**
(21) Numéro de dépôt: 20167787.9
(22) Date de dépôt: 02.04.2020
(51) Int. Cl.: B60K 11/08, F01P 7/10

(54) **DISPOSITIF D'AÉRATION POUR UN VÉHICULE, PROCÉDÉ DE MONTAGE ASSOCIÉ**
BELÜFTUNGSVORRICHTUNG FÜR EIN FAHRZEUG UND ENTSPRECHENDES MONTAGEVERFAHREN
AERATION DEVICE FOR A VEHICLE, ASSOCIATED ASSEMBLY METHOD

(30) Priorité: 03.04.2019 FR 1903580
(43) Date de publication de la demande: 11.11.2020
(73) Titulaire: Flex-N-Gate France, 25405 Audincourt (FR)
(72) Inventeur: GUYON, Cyrille, 25600 NOMMAY (FR); DUQUESNOY, David, 70400 CHALONVILLARS (FR)
(74) Mandataire: Lavoix

(56) Documents cités:
- WO-A1-2006/056359
- DE-A1- 10 307 632
- KR-A- 20110 002 149

## Description

La présente invention concerne un dispositif d'aération pour un véhicule comprenant un cadre définissant une ouverture et un dispositif d'obturation comprenant au moins un volet d'obturation s'étendant selon une direction générale dans l'ouverture et comprenant un premier tronçon, présentant une première face extérieure et au moins un deuxième tronçon, présentant une deuxième face extérieure, la face extérieure du volet d'obturation étant formée par la première face extérieure et par la deuxième face extérieure, le premier tronçon et le deuxième tronçon s'étendant dans la continuité l'un de l'autre.

L'invention concerne plus particulièrement un dispositif d'aération destiné à gérer des flux d'air d'un véhicule automobile. Ce système peut avantageusement être utilisé pour la gestion de la température du moteur du véhicule mais il peut également être utilisé pour la gestion de l'aérodynamique du véhicule.

Un tel dispositif d'aération est par exemple agencé à l'avant du véhicule et fait partie de la calandre du véhicule. Le dispositif d'aération permet la gestion d'un flux d'air entrant et destiné à être en contact avec le radiateur et permettant de maintenir le moteur à la température optimale de fonctionnement. Ce dispositif connu permet avantageusement de combiner une forme aérodynamique performante du véhicule et une température de fonctionnement du moteur optimale.

Les dispositifs d'obturation de ces dispositifs d'aération posent des problèmes de rigidité, notamment dans le cas de volets d'obturation de grandes dimensions, c'est-à-dire de volets ayant une longueur supérieure ou égale à 450 millimètres (mm).

En outre, lorsque ces dispositifs d'obturation sont visibles d'un extérieur du véhicule, le risque de fléchissement des dispositifs d'obturations devient important du fait de la pression de l'air devenant très importante sur le dispositif d'obturation.

Pour résoudre ces problèmes, il est connu de l'état de la technique de prévoir plusieurs dispositifs d'obturation distincts ayant des volets de plus petite longueur s'étendant dans la continuité les uns des autres et ayant chacun un système de mise en rotation des volets. Le choix dans la dimension et la forme des volets est donc limité.

Le document WO 2006/056359 A1 montre, par ailleurs, un dispositif d'aération pour un véhicule comprenant un cadre définissant une ouverture et un dispositif d'obturation comprenant au moins un volet d'obturation s'étendant selon une direction générale dans l'ouverture et comprenant un premier tronçon, présentant une première face extérieure et au moins un deuxième tronçon, présentant une deuxième face extérieure, ledit dispositif d'aération étant tel que le premier tronçon est solidarisé au deuxième tronçon en une région de jonction, une pièce de parement recouvrant au moins la région de jonction sur la face extérieure du volet d'obturation.

Ces dispositifs d'obturation sont relativement encombrants, complexes à réaliser et à monter sur le véhicule du fait de la multiplicité des pièces impliquées dans la fabrication de ces dispositifs.

En outre, ces dispositifs d'obturation peuvent dégrader l'esthétique du véhicule, la transition entre les volets adjacents étant visible, notamment lorsque ceux-ci sont visibles depuis un extérieur du véhicule alors que la volonté des constructeurs automobiles est d'adapter la calandre au style du véhicule afin que celle-ci s'intègre au mieux et de manière esthétique dans l'architecture du véhicule.

L'invention vise à pallier ces inconvénients en proposant un dispositif d'aération conformément à la revendication 1.

A cet effet, l'invention porte sur un dispositif d'aération du type précité dans lequel le premier tronçon est solidarisé au deuxième tronçon en une région de jonction, une pièce de parement recouvrant au moins la région de jonction sur la face extérieure du volet d'obturation.

La solidarisation du premier tronçon et du deuxième tronçon de volet permet de fabriquer des volets d'obturation de grande longueur tout en conservant une simplicité de système et de montage.

Le montage d'un tel volet d'obturation est ainsi amélioré et permet notamment un montage facilité de volets galbés, ou bombés, plus particulièrement de volets galbés de grande dimension.

La pièce de parement permet par ailleurs d'améliorer l'intégration du dispositif d'obturation à l'architecture du véhicule d'un point de vue esthétique, la jonction entre les deux tronçons du volet n'étant pas visible depuis l'extérieur du véhicule.

Selon un mode de réalisation, le dispositif d'aération comporte l'une ou plusieurs des caractéristiques suivantes, prises isolément ou en combinaison:
- le premier tronçon comprend une région de fixation et le deuxième tronçon comprend une région de fixation, la région de fixation du premier tronçon étant de forme complémentaire à la région de fixation du deuxième tronçon, la région de fixation du premier tronçon et la région de fixation du deuxième tronçon étant solidarisées l'une à l'autre,
- la région de fixation du premier tronçon comprend une première face de coopération et la région de fixation du deuxième tronçon comprend une deuxième face de coopération, la région de fixation du premier tronçon étant solidarisée avec la région de fixation du deuxième tronçon de sorte que la première face de coopération et la deuxième face de coopération sont appliquées l'une contre l'autre dans un plan sensiblement parallèle à la face extérieure du volet d'obturation, le plan s'étendant sensiblement à mi-distance de la face extérieure et d'une face intérieure du volet d'obturation, opposée à la face extérieure.

La solidarisation du premier tronçon et du deuxième tronçon suivant l'invention permet au volet de conserver des propriétés structurelles acceptables pour l'utilisation dans un dispositif d'aération, tout en facilitant l'installation du volet sur le véhicule.

Suivant d'autres aspects avantageux de l'invention, le dispositif d'aération comporte l'une ou plusieurs des caractéristiques suivantes, prises isolément ou suivant toutes les combinaisons techniquement possibles :
- la pièce de parement recouvre la totalité des faces extérieures du premier et du deuxième tronçon,
- un support comporte un premier et un deuxième organes de maintien, le premier tronçon étant lié au premier organe de maintien, le deuxième tronçon étant lié au deuxième organe de maintien,
- un organe de maintien intermédiaire, placé entre le premier organe de maintien et le deuxième organe de maintien, supporte le premier et le deuxième tronçon dans la région de jonction, et
- le premier tronçon et le deuxième tronçon sont montés mobiles en rotation autour d'un axe de chaque organe de maintien.

L'invention se rapporte en outre à un véhicule comprenant un dispositif d'aération pour un véhicule tel que décrit précédemment.

L'invention se rapporte également à un procédé de montage d'un dispositif d'aération pour un véhicule comprenant les étapes suivantes :
- fixation du premier tronçon sur le support;
- fixation du deuxième tronçon sur le support;
- solidarisation du premier et du deuxième tronçon; et
- installation de la pièce de parement sur la face extérieure du volet d'obturation. Le procédé selon l'invention peut comporter les caractéristiques suivantes :
- la fixation du premier tronçon sur le support est effectuée avec une première cinématique ;
- la fixation du deuxième tronçon sur le support est effectuée avec une deuxième cinématique, différente de la première cinématique, le premier tronçon et le deuxième tronçon une fois solidarisés n'étant pas aptes à être engagés sur le premier et le deuxième organes de maintien par une cinématique commune.

L'invention sera mieux comprise à la lecture de la description qui va suivre, donnée uniquement à titre d'exemple non limitatif et faite en se référant aux dessins sur lesquels :
[Fig 1] - la figure 1 est une vue de face d'une partie du dispositif d'aération selon l'invention, le dispositif d'obturation étant dans une position ouverte ;
[Fig 2] - la figure 2 est une représentation schématique vue de face d'une partie du dispositif d'aération selon l'invention, le dispositif d'obturation étant dans une position ouverte ; et

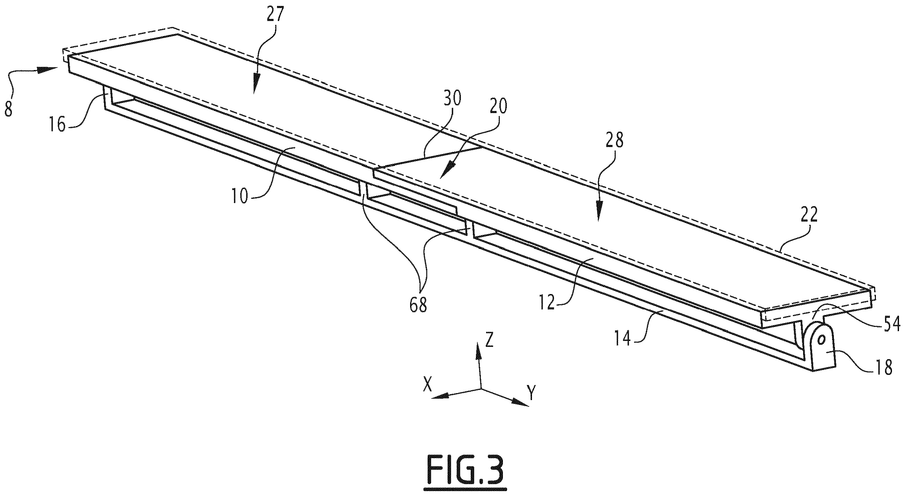

[Fig 3] - la figure 3 est une représentation schématique en perspective d'une partie du dispositif d'aération selon l'invention, le dispositif d'obturation étant dans une position ouverte.

Il est défini une première direction, X. Dans le présent exemple, la première direction est parallèle à un axe avant-arrière du véhicule. La première direction est notée « première direction X ».

Dans la présente description, il est aussi défini une deuxième direction parallèle aux essieux du véhicule. La deuxième direction est notée « deuxième direction Y » et correspond ainsi à la largeur du véhicule.

Enfin, il est également défini une troisième direction, perpendiculaire à la première direction X et à la deuxième direction Y. Dans le présent exemple, la troisième direction correspond à la hauteur du véhicule. La troisième direction est notée « troisième direction Z ».

On qualifie d'intérieur l'ensemble des volumes contenus dans un véhicule. Par extension, on qualifie de face intérieure, une face tournée vers un volume intérieur du véhicule. Par opposition, on qualifie d'extérieur tout volume étant extérieur au véhicule et une face extérieure est tournée vers un volume extérieur.

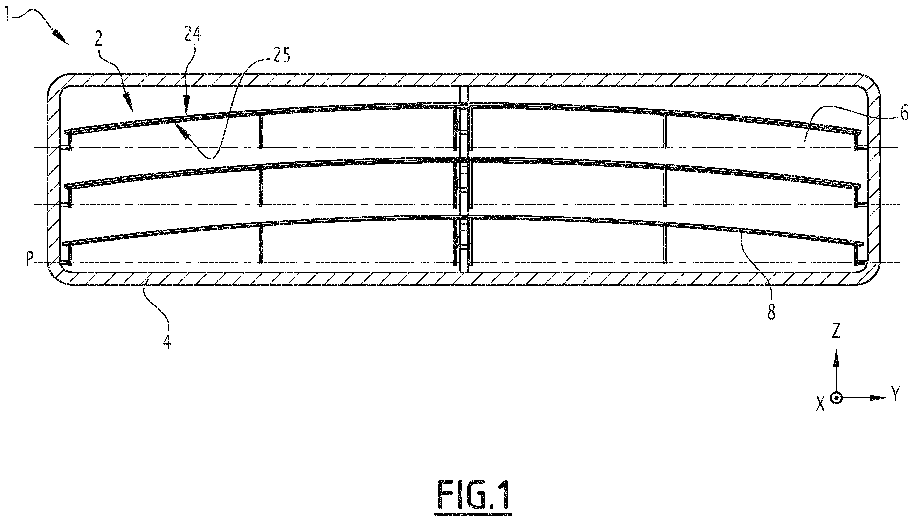

En référence à la figure 1, on décrit un dispositif d'aération 1 comprenant un dispositif d'obturation 2 et un cadre 4. Un tel dispositif d'aération 1 est destiné à être monté sur un véhicule, par exemple à l'avant de celui-ci dans le pare-chocs du véhicule.

Le cadre 4 définit une ouverture 6 d'entrée d'air dans le véhicule.

Selon un mode de réalisation, le cadre 4 est formé par le pare-chocs du véhicule.

Ainsi, l'ouverture 6 est par exemple formée dans une peau de pare-chocs du véhicule.

En variante, le cadre 4 est formé par un module du véhicule et/ou par une pièce destinée à être montée sur le véhicule.

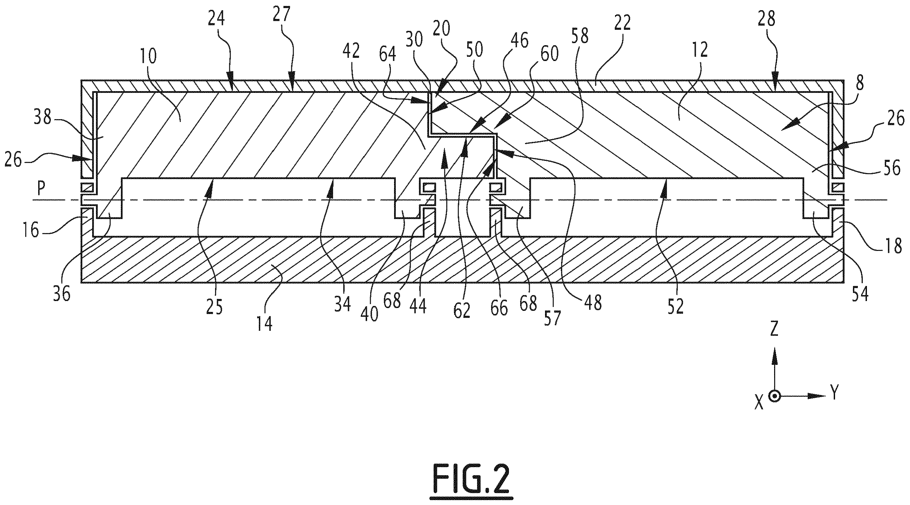

Le dispositif d'obturation 2 comprend au moins un volet d'obturation 8. Le volet d'obturation 8 comprend un premier tronçon de volet d'obturation 10 et un deuxième tronçon de volet d'obturation 12 comme illustré sur la figure 2. Dans la suite de la description le volet d'obturation 8 peut être nommé « volet 8 », le premier tronçon de volet d'obturation 10 peut être nommé « premier tronçon 10 », le deuxième tronçon de volet d'obturation 12 peut être nommé « deuxième tronçon 12 ».

Le premier 10 et le deuxième 12 tronçons sont fixés entre eux en une région de jonction 20.

Le dispositif d'aération comprend par ailleurs une pièce de parement 22 recouvrant la région de jonction 20.

Le dispositif d'aération comprend un support 14 comprenant un premier organe de maintien 16 et un deuxième organe de maintien 18. Le support 14 est par exemple solidarisé au cadre 4 et le volet d'obturation 8 est lié au support 14.

Dans le présent exemple de réalisation, le dispositif d'obturation 2 comprend une pluralité de volets d'obturation 8. Les volets d'obturation 8 sont par exemple en un polymère.

Par exemple, le dispositif d'obturation 2 comprend un nombre de volets compris entre deux et vingt.

Chaque volet d'obturation 8 présente une direction générale parallèle à la deuxième direction Y.

Chaque volet d'obturation 8 s'étend selon la deuxième direction Y dans l'ouverture 6. Dans le cas où le dispositif comprend plusieurs volets d'obturation 8, les volets d'obturation sont alors disposés les uns au-dessus des autres principalement selon la troisième direction Z.

Chaque volet 8 comporte une face intérieure 25, opposée à la face extérieure 24. Chaque volet 8 comporte par ailleurs des faces latérales 26, reliant les faces intérieure 25 et extérieure 24 et définissant les extrémités du volet 8 selon une direction Y. Selon différents modes de réalisation, les faces latérales 26 peuvent être perpendiculaires ou inclinées selon un angle défini par rapport aux faces intérieure 25 et extérieure 24. Les faces latérales 26 peuvent aussi former une surface non plane entre les faces intérieure 25 et extérieure 24.

Le premier tronçon comporte une première face extérieure 27 et le deuxième tronçon comporte une deuxième face extérieure 28.

La face extérieure 24 du volet d'obturation 8 est formée par la première face extérieure 27 et la deuxième face extérieure 28. La première face extérieure 27 et la deuxième face extérieure 28 s'étendent dans la continuité l'une de l'autre de sorte à former la face extérieure 24 de volet de façon sensiblement continue. La forme générale de la face extérieure 24 est continue. La forme générale de la face extérieure 24 est par exemple un plan. La forme générale de la face extérieure 24 est, selon un autre mode de réalisation, incurvée. Par exemple, le rayon de courbure de la face extérieure est compris entre 3 et 4 mètres.

La face extérieure 24 comprend une césure 30 entre la première face extérieure 27 et la deuxième face extérieure 28. La région de jonction 20 comprend par exemple la césure 30, une partie de la première face extérieure 27 et une partie de la deuxième face extérieure 28.

La pièce de parement 22 est placée sur la face extérieure 24. La pièce de parement recouvre au moins la région de jonction 20. En particulier, la pièce de parement 22 recouvre la césure 30 définie par la première face extérieure et la deuxième face extérieure 28. La pièce de parement recouvre au moins une région de la première face extérieure 27 et au moins une région de la deuxième face extérieure 28. Avantageusement, la pièce de parement recouvre la totalité de la première face extérieure 27 et la totalité de la deuxième face extérieure 28. La pièce de parement 22 recouvre alors la totalité de la face extérieure 24. Avantageusement, la pièce de parement 22 recouvre par ailleurs une région des faces latérales 26.

La pièce de parement 22 permet notamment d'améliorer l'esthétique du dispositif d'aération 1 en cachant la césure 30. La pièce de parement, lorsqu'elle recouvre la totalité de la première face extérieure 27 et la totalité de la deuxième face extérieure 28 donne une apparence continue au volet d'obturation 8. La pièce de parement 22 peut aussi former un médaillon cachant la césure 30 et améliorant l'esthétique du dispositif d'aération 1 sans pour autant donner une apparence continue audit volet d'obturation 8.

Selon le mode de réalisation dans lequel la pièce de parement recouvre la totalité de la deuxième face extérieure 28, et lorsque le dispositif d'obturation 2 est fermé, la césure 30, le premier tronçon 10 et le deuxième tronçon 12 ne sont pas visible depuis l'extérieur du véhicule. En effet, la seule partie visible du volet d'obturation 8 est la pièce de parement 22. La continuité de la pièce de parement offre un aspect esthétique satisfaisant.

La pièce de parement 22 peut être fixée sur le premier tronçon 10 et le deuxième tronçon 12 par un ensemble de moyens adaptés à la fixation de tels éléments. L'ensemble des moyens adaptés à la fixation de tels éléments comprend par exemple des moyens mécaniques, chimiques ou des moyens de soudure.

Le premier tronçon 10 présente une direction générale parallèle à la deuxième direction Y. Le premier tronçon 10 est par exemple une plaque allongée suivant la direction Y. L'épaisseur du premier tronçon 10 est définie dans une direction perpendiculaire à la première face extérieure 27. L'épaisseur du premier tronçon est significativement inférieure aux autres dimensions du premier tronçon 10. L'épaisseur est notamment significativement inférieure à la longueur selon la direction générale. L'épaisseur est par exemple au moins vingt fois plus faible que la longueur selon la direction générale. L'épaisseur est par ailleurs significativement inférieure à la longueur selon la direction perpendiculaire au plan formé par la direction générale et la direction de l'épaisseur, aussi appelée largeur. L'épaisseur est par exemple au moins cinq fois plus faible que la largeur.

Le premier tronçon comprend une première face intérieure 34, opposée à la première face extérieure 27 selon la direction de l'épaisseur du premier tronçon 10. La première face intérieure 34 forme une partie de la face intérieure 25 du volet d'obturation 8.

Le premier tronçon comprend une patte de maintien d'extrémité de premier tronçon 36, placée par exemple sur la première face intérieure 34, par exemple en une extrémité externe de premier tronçon 38.

Le premier tronçon comprend par ailleurs une première patte de maintien intermédiaire 40, placée par exemple sur la première face intérieure 34, par exemple en une extrémité interne de premier tronçon 42.

Le premier tronçon 10 comprend par ailleurs une région de fixation 44.

La région de fixation 44 est placée en l'extrémité interne 42.

Selon un mode de réalisation particulier, la région de fixation 44 comprend une première face de coopération 46, une face de butée externe 48 et une face de butée interne 50.

La face de butée interne 50 est perpendiculaire à la première face extérieure 27. Cette face s'étend par exemple depuis la première face extérieure 27 jusqu'à la moitié de l'épaisseur du premier tronçon 10 et suivant tout la largeur du premier tronçon 10. Cette face de butée interne 50 s'étend donc entre la face extérieure 20 et le plan s'étendant à mi-distance de la face extérieure 24 et de la face intérieure 25 du volet d'obturation 8.

La face de butée externe 48 est perpendiculaire à la première face intérieure 34. Cette face s'étend par exemple depuis la première face intérieure 34 jusqu'à la moitié de l'épaisseur du premier tronçon 10 et suivant toute la largeur du premier tronçon 10. Cette face de butée interne externe 48 s'étend donc entre la première face intérieure 34 et le plan s'étendant à mi-distance de la face extérieure 24 et de la face intérieure 25 du volet d'obturation 8.

La face de butée interne 50 et la face de butée externe 48 ne sont pas coplanaires. La distance entre l'extrémité externe 38 du premier tronçon et la face de butée interne 50 est inférieure à la distance entre l'extrémité externe 38 du premier tronçon et la face de butée externe 48.

La face de coopération du premier tronçon 46 est parallèle à la première face extérieure 27 et à la première face intérieure 34. La face de coopération du premier tronçon 46 s'étend avantageusement selon une surface médiane à la face extérieure 24 du volet et à la face intérieure 25 du volet 8. La face de coopération 46 s'étend par exemple dans le plan s'étendant à mi-distance de la face extérieure 24 et de la face intérieure 25 du volet d'obturation 8. La face de coopération s'étend entre la face de butée interne 50 et la face de butée externe 48.

La région de fixation 44 du premier tronçon est fixée au deuxième tronçon 12.

De façon similaire au premier tronçon 10, le deuxième tronçon 12 présente une direction générale parallèle à la deuxième direction Y

Le deuxième tronçon 12 est par exemple une plaque allongée suivant la direction Y.

L'épaisseur du deuxième tronçon 12 est définie dans une direction perpendiculaire à la deuxième face extérieure 28. L'épaisseur du deuxième tronçon 12 est semblable à l'épaisseur du premier tronçon 10. La largeur du deuxième tronçon 12 est définie de façon analogue à l'épaisseur du premier tronçon 10 et est semblable à la largeur du premier tronçon 20.

Le deuxième tronçon comprend une deuxième face intérieure 52 opposée à la deuxième face extérieure 28 selon la direction de l'épaisseur du deuxième tronçon 12. La deuxième face intérieure 52 du deuxième tronçon 12 forme une partie de la face intérieure 25 du volet d'obturation 8.

Le deuxième tronçon comprend une patte de maintien d'extrémité de deuxième tronçon 54, placée par exemple sur la deuxième face intérieure 52, par exemple en une extrémité externe de deuxième tronçon 56.

Le deuxième tronçon comprend par ailleurs une patte de maintien intermédiaire de deuxième tronçon 57, placée par exemple sur la deuxième face intérieure 52, par exemple en une extrémité interne du deuxième tronçon 58.

Le deuxième tronçon 12 comprend par ailleurs une région de fixation 60.

La région de fixation 60 est placée en l'extrémité interne 58.

Selon un mode de réalisation particulier, la région de fixation 60 comprend une face de coopération du deuxième tronçon 62, une face de butée externe 64 et une face de butée interne 66.

La région de fixation 60 est fixée au premier tronçon 10. Plus particulièrement, la région de fixation 60 est fixée à la région de fixation 44. Les régions de fixation 60 et 44 coopèrent en la région de jonction 20.

La région de fixation du deuxième tronçon 60 est de forme complémentaire à la région de fixation du premier tronçon 44.

La face de coopération du premier tronçon 46 et la face de coopération du deuxième tronçon 62 sont destinées à être en appui l'une sur l'autre et la forme de ces faces est adaptée au montage.

Selon un mode de réalisation particulier, la face de butée externe 64 est perpendiculaire à la deuxième face extérieure 28. Cette face s'étend par exemple depuis la deuxième face extérieure 28 jusqu'à la moitié de l'épaisseur du deuxième tronçon 12 et suivant toute la largeur du deuxième tronçon 12. Cette face de butée externe 64 s'étend donc entre la deuxième face extérieure 28 et le plan s'étendant à mi-distance de la face extérieure 24 et de la face intérieure 25 du volet d'obturation 8.

La face de butée interne 66 est perpendiculaire à la deuxième face intérieure 52. Cette face s'étend par exemple depuis la deuxième face intérieure 52 jusqu'à la moitié de l'épaisseur du deuxième tronçon 12 et suivant tout la largeur du deuxième tronçon. Cette face de butée interne 66 s'étend donc entre la deuxième face intérieure 52 et le plan s'étendant à mi-distance de la face extérieure 24 et de la face intérieure 25 du volet d'obturation 8.

La face de butée interne 66 et la face de butée externe 64 ne sont pas coplanaires.

La distance entre la face de butée interne 66 et la face de butée externe 64 est égale à la distance entre la face de butée interne 50 et la face de butée externe 48.

La face de coopération du deuxième tronçon 62 est parallèle à la deuxième face extérieure 28 et à la deuxième face intérieure 52. La face de coopération du premier tronçon 62 s'étend avantageusement selon une surface médiane à la face extérieure 24 du volet et à la face intérieure 25 du volet. La face de coopération 62 s'étend par exemple dans le plan s'étendant à mi-distance de la face extérieure 24 et de la face intérieure 25 du volet d'obturation.

La face de coopération 62 s'étend entre la face de butée externe 64 et la face de butée interne 66.

La région de fixation 44 est solidarisée à la région de fixation 60. Le premier tronçon 10 et le deuxième tronçon 12 sont solidarisés à l'interface entre la région de fixation 44 et la région de fixation 60. Ce type de solidarisation est connu dans le domaine de la menuiserie et forme un assemblage appelé « mi-bois ».

La géométrie des régions de fixation 44 et 60 diffère selon le mode de réalisation et la solidarisation n'est pas limité à un assemblage de type « mi-bois ». Les régions de fixation 44 et 60 sont de formes complémentaires et le type de solidarisation peut aussi former un assemblage dit « à queue d'aronde », « à queue droite », « à enfourchement », « à flottage » ou toute autre type d'assemblage idoine.

Le support 14 maintient le volet d'obturation 8. Plus particulièrement, le premier organe de maintien 16 et le deuxième organe de maintien 18 maintiennent le volet d'obturation 8.

Le premier tronçon 10 est lié au premier organe de maintien 16, et est par exemple mobile en rotation par rapport au premier organe de maintien 16, et le deuxième tronçon 12 est lié au deuxième organe de maintien 18, et est par exemple mobile en rotation par rapport au deuxième organe de maintien 18.

Le support 14 comprend un organe de maintien intermédiaire 68, placé entre le premier organe de maintien 16 et le deuxième organe de maintien 18.

Selon le mode de réalisation, l'organe de maintien intermédiaire 68 est placé entre la première des pattes de maintien intermédiaire 40 et 57 ou lesdites pattes de maintien intermédiaire 40 et 57 sont placées entre deux régions de l'organe de maintien 68.

Selon un mode de réalisation, le dispositif d'obturation 2 présente une position ouverte dans laquelle l'ouverture 6 est au moins en partie ouverte de telle sorte qu'un flux d'air peut circuler au travers de l'ouverture 6, par exemple selon la première direction X lorsque le dispositif d'obturation 2 est monté sur le véhicule, et une position d'obturation dans laquelle le dispositif d'obturation 2 obture au moins en partie l'ouverture 6.

Il est défini une surface de passage de l'air au travers du dispositif d'aération 1 délimitée entre le cadre 4 et le dispositif d'obturation 2. Lorsque le dispositif d'obturation 2 est dans la position d'obturation, la surface de passage de l'air est inférieure à la surface de passage de l'air lorsque le dispositif d'obturation 2 est dans la position ouverte.

Selon un mode de réalisation, le flux d'air est complètement interrompu lorsque le dispositif d'obturation 2 est dans la position d'obturation. Chaque volet d'obturation 8 est mobile entre une position ouverte lorsque le dispositif d'obturation 2 est dans la position ouverte et une position d'obturation lorsque le dispositif d'obturation 2 est dans la position d'obturation. Chaque volet d'obturation 8 est mobile en rotation entre la position ouverte et la position d'obturation autour d'un axe de pivotement P.

L'axe de pivotement P de chaque volet 8 est, dans cet exemple, sensiblement parallèle à la deuxième direction Y.

En variante, l'axe de pivotement P d'au moins un volet 8 forme un angle non nul avec la deuxième direction Y, la première direction X et/ou la troisième direction Z.

Il est défini un angle de rotation des volets d'obturation 8 entre la position ouverte et la position d'obturation autour de l'axe de pivotement P.

Par exemple, l'angle de rotation est sensiblement égal à 90°.

Dans la position d'obturation, une face extérieure 24 de chaque volet 8 est orientée contre la direction du flux d'air. Cela permet avantageusement d'améliorer le coefficient de trainé Cx du véhicule dans la position d'obturation.

Plus particulièrement, le premier tronçon est monté mobile en rotation sur le premier organe de maintien 16 et sur l'organe de maintien intermédiaire 68 autour de l'axe de pivotement P. Le deuxième tronçon est monté mobile en rotation sur le deuxième organe de maintien 18 et sur l'organe de maintien intermédiaire 68 autour de l'axe de pivotement P.

Le volet d'obturation 8 comprenant le premier tronçon 10 et le deuxième tronçon 12 solidarisés est ainsi monté mobile en rotation autour des organes de maintien 16 et 18 ainsi qu'autour de l'organe de maintien intermédiaire 68.

Le montage du volet 8 mobile en rotation autour de l'organe de maintien intermédiaire 68 améliore le maintien du volet d'obturation 8 et prévient notamment de potentiels enrayements du dispositif d'obturation 2 pouvant survenir à la suite d'une déformation trop importante du volet 8, par exemple à la suite d'un effort aérodynamique important sur un volet de grandes dimensions

Le volet d'obturation 8 peut comprendre un nombre de tronçon supérieur à 2. La liaison entre un tronçon n et un tronçon n+1 avec n un entier naturel est alors similaire à la liaison précédemment décrite entre le premier tronçon 10 et le deuxième tronçon 12.

Un procédé de montage d'un tel dispositif d'aération va maintenant être décrit.

Le premier 10 et le deuxième 12 tronçons sont tout d'abord fabriqués. Ils sont par exemple fabriqués en un matériau polymère.

Le support 14 est fabriqué, par exemple dans le même matériau que les volets, notamment en un matériau polymère. Le support est selon un mode de réalisation particulier une pièce métallique.

La pièce de parement est fabriquée, par exemple en un matériau polymère.

Selon un premier procédé de montage, le premier tronçon 10 est tout d'abord solidarisé au deuxième tronçon 12 en fixant la région de fixation 44 à la région de fixation 60. La région de fixation 44 est par exemple collée à la région de fixation 60.

Le volet d'obturation 8 ainsi formé par assemblage du premier tronçon 10 au deuxième tronçon 12 est ensuite solidarisé au support 14. Les pattes de maintien d'extrémité 36, 54 et les pattes de maintien intermédiaires 40, 57 sont engagées dans le premier 16, le deuxième 18 organes de maintien ainsi que dans l'organe de maintien intermédiaire 68, les pattes de maintien 36, 54, 40, 57 formant par exemple avec les organes de maintien 16, 18, 68 des charnières du volet d'obturation 8.

La pièce de parement 22 est ensuite installée sur le volet d'obturation 8. La pièce de parement 22 est en particulier installée sur la face extérieure 24 du volet d'obturation. La pièce de parement est par exemple collée, rivetée, soudée, clipée ou vissée sur le volet d'obturation.

Un deuxième procédé de montage comprend comme dans le procédé précédent l'étape de solidarisation du premier tronçon 10 au deuxième tronçon 12.

La pièce de parement 22 est ensuite directement installée sur le volet d'obturation 8 ainsi formé avant la solidarisation du volet d'obturation sur le support 14 comme décrit dans le premier procédé de montage.

Un troisième procédé de montage comprend tout d'abord une solidarisation du premier tronçon 10 au support 14, selon une première cinématique.

La première cinématique comprend un ensemble de déplacements du premier tronçon 10 destiné à aboutir à l'installation du premier tronçon 10 sur le support 14.

La première cinématique comprend l'engagement de la patte de maintien d'extrémité 36 dans le premier organe de maintien 16 et l'engagement de la patte de maintien intermédiaire 40 dans l'organe de maintien intermédiaire 68. La première cinématique est par exemple propre au premier tronçon 10. La première cinématique comprend par exemple un engagement du premier tronçon 10 sur l'organe de maintien suivant une direction particulière propre au premier tronçon.

Le deuxième tronçon 12 est solidarisé au support 14 selon une deuxième cinématique. La deuxième cinématique comprend un ensemble de déplacements du deuxième tronçon 12 destiné à aboutir à l'installation du deuxième tronçon 12 sur le support 14. La deuxième cinématique est par exemple différente de la première cinématique et incompatible avec celle-ci. Ainsi, l'ensemble de déplacement du deuxième tronçon 12 destiné à aboutir à l'installation du deuxième tronçon 12 sur le support 14 est différent de l'ensemble de déplacement du premier tronçon 10 destiné à aboutir à l'installation du premier tronçon 10 sur le support 14, la première cinématique appliquée au deuxième tronçon 12 n'aboutissant pas à l'installation du deuxième tronçon 12 sur le support 14 et inversement.

La deuxième cinématique comprend l'engagement de la patte de maintien d'extrémité 54 dans le deuxième organe de maintien 18 et l'engagement de la patte de maintien intermédiaire 57 dans l'organe de maintien intermédiaire 68. La deuxième cinématique comprend par exemple un engagement du deuxième tronçon 12 sur les organes de maintien 18, 68 suivant une direction particulière propre au deuxième tronçon 12.

Le premier 10 et le deuxième 12 tronçon sont alors solidarisés en fixant la région de fixation 44 à la région de fixation 60

La pièce de parement 22 est ensuite installée sur le volet d'obturation 8, comme décrit dans le premier procédé de montage.

Un tel troisième procédé de montage permet par exemple de verrouiller le volet 8 sur le support 14 une fois la région de fixation 44 solidarisée à la région de fixation 60. En effet, les cinématiques de montage et de démontage du premier 10 et du deuxième tronçon 12 étant différentes et incompatibles, il est impossible de démonter le premier 10 et le deuxième tronçon 12 simultanément, sans désolidariser la région de fixation 44 à la région de fixation 60. Ce verrouillage du volet d'obturation 8 sur le support 14 ne nécessite pas de pièce supplémentaire au dispositif d'aération 1 et permet ainsi d'améliorer la sécurité et la robustesse du dispositif sans augmenter sa complexité.

## Revendications

1. Dispositif d'aération (1) pour un véhicule comprenant un cadre (4) définissant une ouverture (6) et un dispositif d'obturation (2) comprenant au moins un volet d'obturation (8) s'étendant selon une direction générale (Y) dans l'ouverture (6) et comprenant un premier tronçon (10), présentant une première face extérieure (27) et au moins un deuxième tronçon (12), présentant une deuxième face extérieure (28), la face extérieure du volet d'obturation (8) étant formée par la première face extérieure (27) et par la deuxième face extérieure (28), le premier tronçon (10) et le deuxième tronçon (12) s'étendant dans la continuité l'un de l'autre ; ledit dispositif d'aération étant tel que le premier tronçon (10) est solidarisé au deuxième tronçon (12) en une région de jonction (20), une pièce de parement (22) recouvrant au moins la région de jonction (20) sur la face extérieure du volet d'obturation.

2. Dispositif d'aération (1) pour un véhicule selon la revendication 1, dans lequel le premier tronçon (10) comprend une région de fixation (44) et le deuxième tronçon comprend une région de fixation (60), la région de fixation du premier tronçon (44) étant de forme complémentaire à la région de fixation du deuxième tronçon (60), la région de fixation du premier tronçon (44) et la région de fixation du deuxième tronçon (60) étant solidarisées l'une à l'autre.

3. Dispositif d'aération (1) pour un véhicule selon la revendication 2, dans lequel la région de fixation (44) du premier tronçon (10) comprend une première face de coopération (46) et la région de fixation (60) du deuxième tronçon (12) comprend une deuxième face de coopération (62), la région de fixation (44) du premier tronçon (10) étant solidarisée avec la région de fixation (60) du deuxième tronçon (12) de sorte que la première face de coopération (46) et la deuxième face de coopération (62) sont appliquées l'une contre l'autre dans un plan sensiblement parallèle à la face extérieure (24) du volet d'obturation (8), le plan s'étendant sensiblement à mi-distance de la face extérieure (24) et d'une face intérieure (25) du volet d'obturation (8), opposée à la face extérieure (24).

4. Dispositif d'aération pour un véhicule selon l'une quelconque des revendications 1 à 3, dans lequel la pièce de parement (22) recouvre la totalité des faces extérieures (27, 28) du premier (10) et du deuxième (12) tronçon.

5. Dispositif d'aération (1) pour un véhicule selon l'une quelconque des revendications 1 à 4, dans lequel un support (14) comporte un premier (16) et un deuxième (18) organes de maintien, le premier tronçon (10) étant lié au premier organe de maintien (16), le deuxième tronçon (12) étant lié au deuxième organe de maintien (18).

6. Dispositif d'aération (1) pour un véhicule selon la revendication 5, dans lequel un organe de maintien intermédiaire (68), placé entre le premier organe de maintien (16) et le deuxième organe de maintien (18), supporte le premier (10) et le deuxième (12) tronçon dans la région de jonction (20).

7. Dispositif d'aération (1) pour un véhicule selon l'une quelconque des revendications 5 ou 6, dans lequel le premier tronçon (10) et le deuxième tronçon (12) sont montés mobiles en rotation autour d'un axe (P) de chaque organe de maintien (16, 18).

8. Véhicule comprenant un dispositif d'aération (1) pour un véhicule selon l'une quelconque des revendications 1 à 7.

9. Procédé de montage d'un dispositif d'aération (1) pour un véhicule selon l'une quelconque des revendications 5 à 7, comprenant :
- fixation du premier tronçon (10) sur le support (14);
- fixation du deuxième tronçon (12) sur le support (14);
- solidarisation du premier (10) et du deuxième tronçon (12) ; et
- installation de la pièce de parement (22) sur la face extérieure (24) du volet d'obturation (8).

10. Procédé selon la revendication 9, dans lequel :
- la fixation du premier tronçon (10) sur le support (14) est effectuée avec une première cinématique ;
- la fixation du deuxième tronçon (12) sur le support (14) est effectuée avec une deuxième cinématique, différente de la première cinématique ;
le premier tronçon (10) et le deuxième tronçon (12) une fois solidarisés n'étant pas aptes à être engagés sur le premier (16) et le deuxième (18) organes de maintien par une cinématique commune.

## Patentansprüche

1. Belüftungsvorrichtung (1) für ein Fahrzeug, umfassend einen Rahmen (4), der eine Öffnung (6) definiert, und eine Verschlussvorrichtung (2), umfassend mindestens eine Verschlussklappe (8), die sich entlang einer allgemeinen Richtung (Y) in der Öffnung (6) erstreckt und umfassend einen ersten Abschnitt (10), der eine erste Außenfläche (27) aufweist, und mindestens einen zweiten Abschnitt (12) umfasst, eine zweite Außenseite (28) aufweist, wobei die Außenseite der Verschlussklappe (8) durch die erste Außenseite (27) und die zweite Außenseite (28) gebildet ist, wobei sich der erste Abschnitt (10) und der zweite Abschnitt (12) in Fortsetzung zueinander erstrecken;
wobei die Belüftungsvorrichtung derart ist, dass der erste Abschnitt (10) in einem Verbindungsbereich (20) fest mit dem zweiten Abschnitt (12) verbunden ist, wobei ein Verkleidungsstück (22) zumindest den Verbindungsbereich (20) auf der Außenseite der Verschlussklappe abdeckt.

2. Belüftungsvorrichtung (1) für ein Fahrzeug nach Anspruch 1, wobei der erste Abschnitt (10) einen Befestigungsbereich (44) umfasst und der zweite Abschnitt einen Befestigungsbereich (60) umfasst, wobei der Befestigungsbereich des ersten Abschnitts (44) komplementär zu dem Befestigungsbereich des zweiten Abschnitts (60) geformt ist und der Befestigungsbereich des ersten Abschnitts (44) und der Befestigungsbereich des zweiten Abschnitts (60) fest miteinander verbunden sind.

3. Belüftungsvorrichtung (1) für ein Fahrzeug nach Anspruch 2, wobei der Befestigungsbereich (44) des ersten Abschnitts (10) eine erste zusammenwirkende Fläche (46) umfasst und der Befestigungsbereich (60) des zweiten Abschnitts (12) eine zweite zusammenwirkende Fläche (62) umfasst, wobei der Befestigungsbereich (44) des ersten Abschnitts (10) fest mit dem Befestigungsbereich (60) des zweiten Abschnitts (12) verbunden ist, sodass die erste zusammenwirkende Fläche (46) und die zweite zusammenwirkende Fläche (62) in einer Ebene im Wesentlichen parallel zu der Außenfläche (24) der Verschlussklappe (8) aneinander anliegen, wobei sich die Ebene im Wesentlichen in der Mitte zwischen der Außenfläche (24) und einer Innenfläche (25) der Verschlussklappe (8) gegenüber der Außenfläche (24) erstreckt.

4. Belüftungsvorrichtung für ein Fahrzeug nach einem der Ansprüche 1 bis 3, wobei das Verkleidungsstück (22) die gesamten Außenflächen (27, 28) des ersten (10) und des zweiten (12) Abschnitts abdeckt.

5. Belüftungsvorrichtung (1) für ein Fahrzeug nach einem der Ansprüche 1 bis 4, wobei ein Träger (14) ein erstes (16) und ein zweites (18) Halteelement aufweist, wobei der erste Abschnitt (10) mit dem ersten Halteelement (16) verbunden ist und der zweite Abschnitt (12) mit dem zweiten Halteelement (18) verbunden ist.

6. Belüftungsvorrichtung (1) für ein Fahrzeug nach Anspruch 5, wobei ein Zwischenhalteelement (68), das zwischen dem ersten Halteelement (16) und dem zweiten Halteelement (18) platziert ist, den ersten (10) und den zweiten (12) Abschnitt in dem Verbindungsbereich (20) hält.

7. Belüftungsvorrichtung (1) für ein Fahrzeug nach einem der Ansprüche 5 oder 6, wobei der erste Abschnitt (10) und der zweite Abschnitt (12) drehbar beweglich um eine Achse (P) von jedem Halteelement (16, 18) montiert sind.

8. Fahrzeug, umfassend eine Belüftungsvorrichtung (1) für ein Fahrzeug nach einem der Ansprüche 1 bis 7.

9. Montageverfahren einer Belüftungsvorrichtung (1) für ein Fahrzeug nach einem der Ansprüche 5 bis 7, umfassend:
- Befestigen des ersten Abschnitts (10) an der Halterung (14);
- Befestigen des zweiten Abschnitts (12) an der Halterung (14);
- festes Verbinden des ersten (10) und des zweiten (12) Abschnitts; und
- Installieren des Verkleidungsstücks (22) an der Außenseite (24) der Verschlussklappe (8).

10. Verfahren nach Anspruch 9, wobei:
- das Befestigen des ersten Abschnitts (10) an der Halterung (14) mit einer ersten Kinematik ausgeführt wird;
- das Befestigen des zweiten Abschnitts (12) an der Halterung (14) mit einer zweiten Kinematik ausgeführt wird, die sich von der ersten Kinematik unterscheidet;
wobei der erste Abschnitt (10) und der zweite Abschnitt (12), nachdem sie fest verbunden wurden, nicht geeignet sind, um durch eine gemeinsame Kinematik mit dem ersten (16) und dem zweiten (18) Halteelement in Eingriff zu kommen.

## Claims

1. Ventilation device (1) for a vehicle comprising a frame (4) defining an opening (6) and a closure device (2) comprising at least one closure flap (8) extending in a direction general (Y) in the opening (6) and comprising a first section (10), having a first external face (27) and at least a second section (12), having a second external face (28), the external face of the closure flap (8) being formed by the first external face (27) and by the second external face (28), the first section (10) and the second section (12) extending in continuity with one the other;
wherein the ventilation device is such that the first section (10) is joined to the second section (12) in a junction region (20), wherein a trimming piece (22) covers at least the junction region (20) on the external face of the closure flap.

2. Ventilation device (1) for a vehicle according to claim 1, in which the first section (10) comprises a fixing region (44) and the second section comprises a fixing region (60), the fixing region of the first section (44) being of complementary shape to the fixing region of the second section (60), the fixing region of the first section (44) and the fixing region of the second section (60) being secured to one another.

3. Ventilation device (1) for a vehicle according to claim 2, wherein the fixing region (44) of the first section (10) comprises a first interaction face (46), while the fixing region (60) of the second section (12) comprises a second interaction face (62), the fixing region (44) of the first section (10) being integral with the fixing region (60) of the second section (12), so that the first interaction face (46) and the second interaction face (62) abut one another in a plane substantially parallel to the external face (24) of the closure flap (8), the plane extending substantially midway between the external face (24) and an internal face (25) of the closure flap (8), opposite the external face (24).

4. Ventilation device for a vehicle according to any one of claims 1 to 3, wherein the trimming piece (22) covers all of the external faces (27, 28) of the first section (10) and the second section (12).

5. Ventilation device (1) for a vehicle according to any one of claims 1 to 4, in which a support (14) comprises a first holding member (16) and a second holding member (18), the first section (10) being linked to the first holding member (16), the second section (12) being linked to the second holding member (18).

6. Ventilation device (1) for a vehicle according to claim 5, in which an intermediate holding member (68), placed between the first holding member (16) and the second holding member (18), supports the first section (10) and second section (12) in the junction region (20).

7. Ventilation device (1) for a vehicle according to any one of claims 5 or 6, in which the first section (10) and the second section (12) are installed to be able to rotate about an axis (P) of each holding member (16, 18).

8. Vehicle comprising a ventilation device (1) for a vehicle according to any one of claims 1 to 7.

9. Method of installing a ventilation device (1) for a vehicle according to any one of claims 5 to 7, comprising:
- fixing the first section (10) on the support (14);
- fixing the second section (12) on the support (14);
- joining of the first section (10) and the second section (12); and
- installation of the trimming piece (22) on the external face (24) of the closure flap (8).

10. Method according to claim 9, in which:
- the first section (10) is fixed to the support (14) with a first kinematics;
- the second section (12) is fixed to the support (14) with a second kinematics, different from the first kinematics; the first section (10) and the second section (12) once being secured are unable to be engaged on the first holding member (16) and the second holding member (18) by common kinematics.
